# FASCICULE DE BREVET EUROPEEN

(11) **EP 3 751 158 B1**
(45) Date de publication et mention de la délivrance du brevet: **14.08.2024**
(21) Numéro de dépôt: 19179807.3
(22) Date de dépôt: 12.06.2019
(51) Int. Cl.: F16B 25/00, F16B 35/06, F16B 5/02

(54) **VIS BETON POUR LA SUSPENSION D'UNE OSSATURE POUR FAUX PLAFOND**
BETONSCHRAUBE FÜR DIE AUFHÄNGUNG EINER SKELETTBAUKONSTUKTION FÜR ABGEHÄNGTE DECKE
CONCRETE SCREW FOR HANGING A FRAMEWORK FOR A SUSPENDED CEILING

(43) Date de publication de la demande: 16.12.2020
(73) Titulaire: Illinois Tool Works Inc., Glenview, IL 60025 (US)
(72) Inventeur: PERRIER, Matthieu, Glenview, IL Illinois 60025 (US)
(74) Mandataire: HGF

(56) Documents cités:
- EP-A1- 1 420 175
- EP-A1- 2 920 476
- EP-B1- 2 920 476
- CA-A1- 2 815 508
- DE-U1- 8 901 693
- FR-A1- 3 038 354

## Description

### Domaine technique de l'invention

La présente invention concerne une vis béton pour la suspension d'une ossature pour faux plafond.

### Arrière-plan technique

L'arrière-plan technique est notamment illustré par les documents FR-A1-3 038 354, EP-A1-2 920 476, DE-U1-89 01 693, CA-A1-2 815 508 et EP-A1-1 420 175 qui décrivent une vis béton appelé piton.

Une vis béton pour la suspension d'une ossature pour faux plafond a une forme générale allongée le long d'un axe et comporte un premier tronçon axial à filetage externe qui est configuré pour être vissé directement dans un orifice formé dans un plafond en béton.

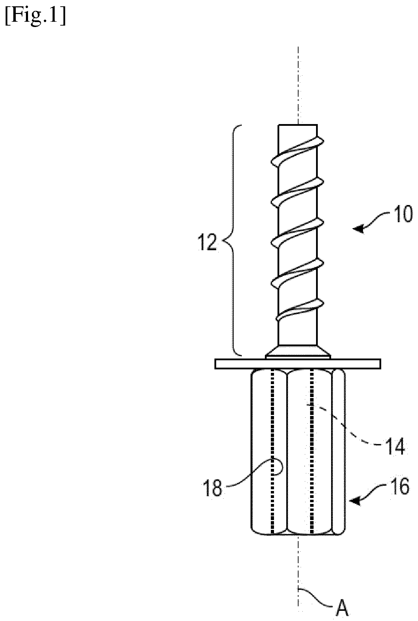

La figure 1 de la demande illustre une vis béton de ce type de la technique antérieure.

Le premier tronçon 12 de la vis 10 est visible à la figure 1. Ce tronçon est du type auto-taraudeur dans la mesure où il est destiné à être vissé directement dans un orifice du plafond et à former lui-même un filetage complémentaire dans cet orifice lors du vissage de la vis.

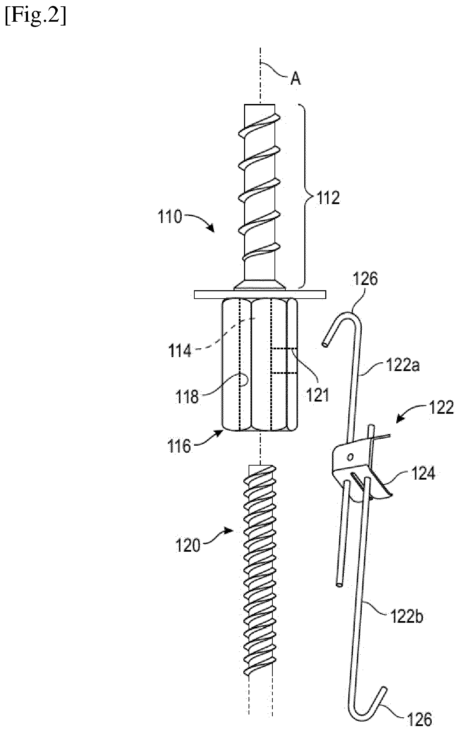

Le deuxième tronçon 14 de la vis n'est pas visible à la figure 1. Il comprend un filetage externe de vissage d'un élément de couplage 16 (aussi appelé coupleur). L'élément de couplage 16 a une forme générale tubulaire et comprend un filetage interne 18 qui s'étend sur toute la dimension axiale de l'élément pour permettre d'une part son vissage sur le deuxième tronçon 14 de la vis et d'autre part le vissage d'une tige filetée (non représentée) de suspension de l'ossature. L'élément de couplage 16 est vissé par une extrémité de son filetage 18 sur le deuxième tronçon 14 et reçoit la tige filetée par son extrémité opposée. Dans ce cas, la vis 10 est du type de celle illustrée à la figure 2 du document FR-A1-3 038 354 et la figure 1 de ce même document enseigne que l'élément de couplage 16 peut être formé d'une seule pièce avec la vis. L'élément de couplage 16 forme alors un deuxième tronçon axial d'entraînement de la vis qui est configuré pour être mis en prise avec un outil afin de mettre en rotation et de visser la vis dans l'orifice. La vis est en général en alliage métallique.

Le vissage de vis de ce type dans des orifices d'un plafond permet de suspendre une ossature pour un faux plafond en plaques de plâtre. Les plaques de plâtre sont vissées sur des rails qui sont suspendus au plafond en béton par des tiges filetées. Les tiges filetées ont chacune une extrémité inférieure vissée dans un support de rail appelé cavalier, et une extrémité supérieure vissée dans l'élément de couplage d'une vis béton. Ce type de plafond est relativement lourd et les vis et les tiges filetées permettent de résister à cette lourde charge.

Il existe une autre technologie plus légère de faux plafond appelé à « dallettes ». De petites dalles relativement légères sont supportées par des profilés qui sont suspendus au plafond en béton par des suspentes. Une suspente comprend en général deux tiges parallèles reliées entre elles par une lame ressort. Chacune des tiges a une extrémité recourbée qui sert de crochet et les crochets des deux tiges peuvent être rapprochées ou éloignées l'un de l'autre au moyen de la lame ressort, en fonction de la distance à prévoir entre le plafond et le faux plafond. Un des crochets de la suspente est fixé à un profilé du faux plafond et l'autre crochet est engagé dans un orifice d'une cheville à frapper préalablement engagée dans un orifice du plafond au moyen d'un marteau.

Autrement dit, dans la technique actuelle, il existe une technologie à vis béton pour la suspension d'un faux plafond à plaques de plâtre, et une technologie à cheville à frapper pour la suspension d'un faux plafond à dallettes.

Ceci situation présente des inconvénients. Dans un même bâtiment, des ouvriers peuvent poser ces deux types de faux-plafond et donc avoir besoin de ces deux technologies et donc de deux références de système de fixation, ce qui complexifie la logistique et augmente le risque d'erreur. Une vis à béton pourrait être vissée par erreur dans un orifice destiné à recevoir une cheville à frapper. Il faudrait alors retirer la vis avant de poser la cheville.

Toutefois, la vis béton ayant taraudé l'orifice, il est possible que la tenue de la cheville dans l'orifice ne soit pas suffisante et oblige à réaliser un autre orifice à côté du premier pour la pose de la cheville. Dans le cas où une cheville à frapper serait engagée par erreur dans un orifice destiné à recevoir une vis béton, il serait également nécessaire de réaliser un autre orifice à côté du premier car le retrait d'une cheville à frapper n'est en général pas possible sans détériorer le béton alentour.

Il existe donc un réel besoin d'une solution unique qui permette la pause des deux types de faux plafond précités.

### Résumé de l'invention

La présente invention concerne une vis béton selon la revendication 1.

On comprend donc que la vis peut être utilisée pour les deux types de faux plafond évoqués dans ce qui précède, à savoir les faux plafonds à plaques de plâtre et les faux plafonds à dallettes. En effet, l'évidement présent sur la vis permet une coopération de la vis avec un crochet d'une suspente pour la pose d'un faux plafond à dallettes, et le deuxième tronçon de la vis permet une coopération de la vis avec une tige filetée pour la suspension d'un faux plafond en plaques de plâtre. Les ouvriers devant mettre en place ces deux types de faux plafond dans un même bâtiment peuvent donc utiliser une seule et même référence de système de fixation, à savoir la vis selon l'invention.

La vis béton selon l'invention peut comprendre une ou plusieurs des caractéristiques suivantes, prises isolément les unes des autres ou en combinaison les unes avec les autres :
- la vis comprend un unique évidement,
- l'évidement se présente sous la forme d'une ouverture ou d'une entaille transversale,
- les premier et deuxième tronçons sont formés d'une seule et même pièce.
- le deuxième tronçon a en section axiale un bord périphérique externe hexagonal,
- le deuxième tronçon comprend un orifice taraudé configuré pour recevoir la tige filetée,
- ledit évidement traverse ledit orifice central,
- ledit évidement est formé à distance de l'orifice central,
- ledit élément de couplage, qui est intégré à la vis, a en section axiale un bord périphérique externe hexagonal et un orifice central taraudé configuré d'une part pour être vissé sur le filetage externe du deuxième tronçon, et d'autre part pour recevoir la tige filetée,
- ledit évidement a un diamètre supérieur ou égale à 5mm et de préférence supérieur ou égale à 6mm.

La présente invention concerne également un kit de suspension d'une ossature pour faux plafond, comportant au moins une vis béton telle que décrite ci-dessus, avec au moins une suspente et/ou au moins une tige filetée.

La présente invention concerne en outre un procédé d'installation d'une ossature pour faux plafond au moyen de vis béton telles que décrites ci-dessus, comprenant les étapes de :
- vissage de ces vis directement dans des orifices formés dans des plafonds en béton,
- engagement des extrémités de suspentes dans les évidements de certaines de ces vis, et
- vissage de tiges filetées dans des orifices taraudés des autres vis ou dans des orifices taraudés d'éléments de couplage rapportés sur ces autres vis.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une vue schématique en perspective d'une vis béton selon la technique antérieure,
[Fig. 2] la figure 2 est une vue schématique en perspective d'une vis béton pas couverte par l'invention,
[Fig. 3a-3b] les figures 3a et 3b sont des vues schématiques, respectivement en perspective et en coupe axiale partielle, d'un mode de réalisation d'une vis béton pas couverte par l'invention,
[Fig. 4a-4b] les figures 4a et 4b sont des vues schématiques, respectivement en perspective et en coupe axiale, d'une variante de réalisation d'une vis béton pas couverte par l'invention,
[Fig. 5a-5b] les figures 5a et 5b sont des vues schématiques, respectivement en perspective et en coupe axiale, d'une autre variante de réalisation d'une vis béton pas couverte par l'invention,
[Fig. 6] la figure 6 est une vue schématique en perspective d'une autre variante de réalisation d'une vis béton selon l'invention,
[Fig. 7] la figure 7 est une vue schématique en perspective d'une autre variante de réalisation d'une vis béton selon l'invention,
[Fig. 8] la figure 8 est une vue schématique en perspective d'une autre variante de réalisation d'une vis béton pas couverte par l'invention, et
[Fig. 9] la figure 9 est une vue schématique en perspective d'une autre variante de réalisation d'une vis béton pas couverte par l'invention.

### Description détaillée de l'invention

La figure 1 représente la technique antérieure et a été décrite dans ce qui précède.

La figure 2 représente une vis béton 110 apte à coopérer d'une part avec une tige filetée 120 et d'autre part avec une suspente 122, l'une ou l'autre selon le type de faux-plafond envisagé.

Le premier tronçon 112 de la vis 110 est visible à la figure 2. Ce tronçon 112 est du type auto-taraudeur dans la mesure où il est destiné à être vissé directement dans un orifice du plafond en béton et à former lui-même un filetage complémentaire dans cet orifice lors du vissage de la vis. Les caractéristiques dimensionnelles de ce tronçon peuvent être déterminées par un homme du métier, notamment au regard de l'enseignement du document FR-A1-2 521 235.

Le deuxième tronçon 114 de la vis n'est pas visible à la figure 2. Il comprend un filetage externe de vissage d'un élément de couplage 116 (aussi appelé coupleur). L'élément de couplage 116 a une forme générale tubulaire et comprend un filetage interne 118 qui s'étend sur toute la dimension axiale de l'élément pour permettre d'une part son vissage sur le deuxième tronçon 114 et d'autre part le vissage de la tige filetée 120. L'élément de couplage 116 est vissé par une extrémité de son filetage 118 sur le deuxième tronçon 114 et reçoit la tige filetée 120 par son extrémité opposée. L'élément de couplage 116 a en section transversale un profil externe hexagonal pour pouvoir être mis en prise et entraîné en rotation au moyen d'un outil approprié.

La vis 110, et par exemple son élément de couplage 116, comprend un évidement transversal 121 configuré pour recevoir une extrémité d'une suspente 122.

De façon connue, la suspente 122 comprend deux tiges 122a, 122b parallèles reliées entre elles par une lame ressort 124. Chacune des tiges 122a, 122b a une extrémité recourbée qui sert de crochet 126 et les crochets des deux tiges peuvent être rapprochées ou éloignées l'un de l'autre au moyen de la lame ressort 124, en fonction de la distance à prévoir entre le plafond et le faux-plafond. Un des crochets de la suspente est fixé à un profilé du faux plafond et l'autre crochet est engagé dans l'évidement 121 de la vis 110.

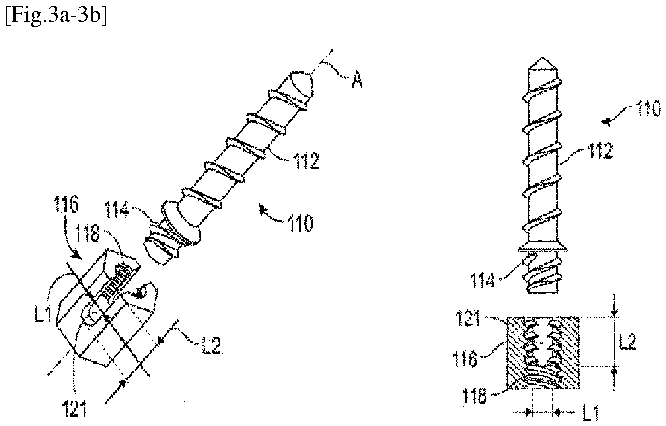

Les figures 3a et suivantes illustrent plusieurs variantes de réalisation d'une vis béton.

Dans le cas des figures 3a et 3b, la vis 110 est en deux parties fabriquées indépendamment l'une de l'autre. La première partie de la vis comprend le premier tronçon 112 ainsi qu'un filetage externe formant le deuxième tronçon 114. La seconde partie est formée par l'élément de couplage 116 qui est rapporté et vissé sur le filetage externe du deuxième tronçon 114, comme dans la figure 2. L'élément de couplage est configuré pour être mis en prise avec un outil d'entraînement et de vissage de la vis.

Cet élément de couplage 116 comprend un évidement 121 en forme d'encoche qui s'étend dans un plan passant par l'axe A de la vis 110 sur une majeure partie de sa longueur. Cette encoche peut s'étendre sur toute la dimension transversale de l'élément 116 ou seulement une partie de cette dimension. L'encoche est dimensionnée pour recevoir un crochet 126 de suspente et a par exemple une épaisseur ou largeur L1 supérieure ou égale à 5mm voire 6mm.

L'encoche a une longueur L2 mesurée le long de l'axe A qui est suffisante pour pourvoir accueillir le crochet 126 lorsque l'élément 116 est vissé sur le filetage 114.

En variante, l'évidement 121 pourrait se présenter sous le forme d'un orifice, comme dans la figure 2, qui pourrait s'étendre sur toute ou partie de la dimension transversale de l'élément 116.

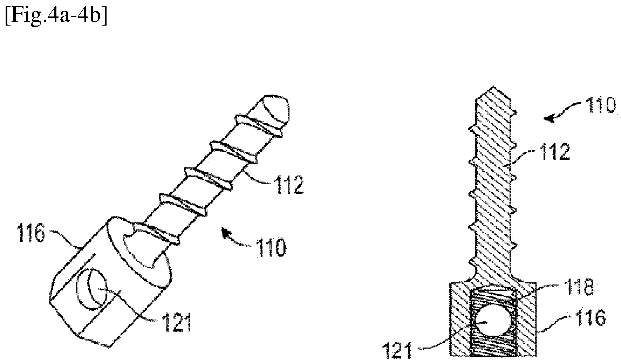

Dans le cas des figures 4a et 4b, la vis 110 est formée d'une seule pièce, c'est-à-dire que son élément de couplage 116 est intégré à la vis 110. L'élément de couplage 116 forme le deuxième tronçon 114 de la vis et comprend un évidement 121 en forme d'orifice transversal, qui passe à travers un orifice taraudé central. L'élément 116 comprend donc le filetage interne 118 de vissage de la tige filetée.

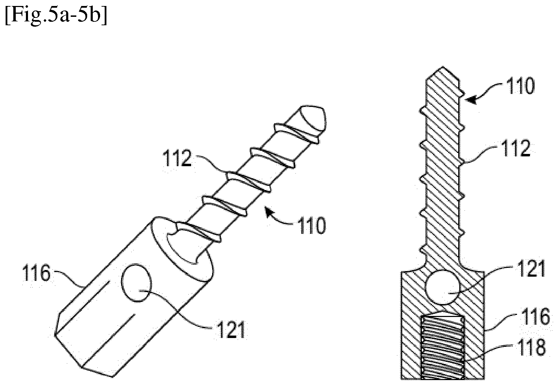

Dans le cas des figures 5a et 5b, la vis 110 est formée d'une seule pièce, c'est-à-dire que son élément de couplage 116 est intégré à la vis. L'élément de couplage 116 forme le deuxième tronçon 114 et comprend un évidement 121 en forme d'orifice transversal, qui est situé à distance d'un orifice taraudé central 118. L'élément 116 comprend donc le filetage interne 118 de vissage de la tige filetée. Le deuxième tronçon de la vis peut ainsi comprendre deux parties adjacentes, une première comportant le profil extérieur hexagonal d'entraînement et l'orifice 118, et une seconde s'étendant entre cette première partie et le premier tronçon 112, et comportant l'évidement 121.

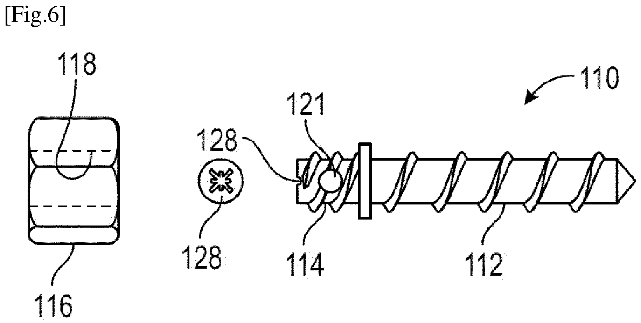

La figure 6 illustre un autre mode de réalisation dans lequel l'évidement 121 est formé sur le filetage externe du deuxième tronçon 114. La mise en prise et l'entraînement en rotation de la vis est ici réalisée grâce à une empreinte 128 réalisée à l'extrémité libre du deuxième tronçon 114. Cette empreinte 128, par exemple du type TORX^{®}, est configurée pour recevoir un embout complémentaire d'un outil d'entraînement porté par une visseuse ou analogue. Un élément de couplage 116 peut en outre être vissé sur le deuxième tronçon 114 si la vis doit être utilisée en combinaison avec une tige filetée.

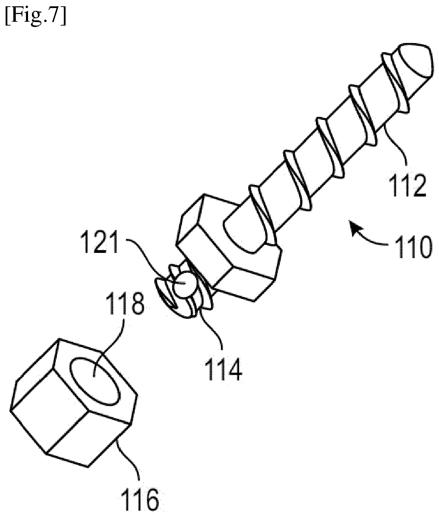

La figure 7 illustre une variante qui se distingue de celle de la figure 6 en ce que la vis 110 comprend, entre le filetage externe 114 et le premier tronçon 112, un profil extérieur hexagonal d'entraînement. Ce profil hexagonal remplace l'empreinte 128 de la figure 6.

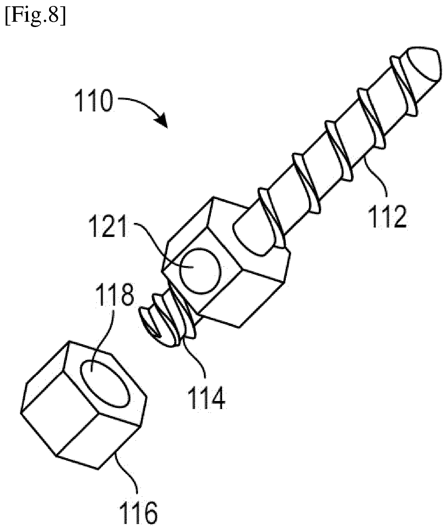

La figure 8 illustre une variante qui se distingue de celle de la figure 7 en ce que l'évidement 121 n'est plus situé sur le filetage externe du deuxième tronçon 114 mais sur le profil extérieur hexagonal d'entraînement.

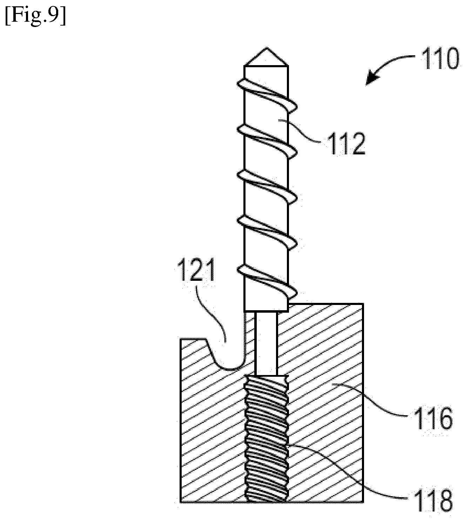

La figure 9 illustre une autre variante proche des modes de réalisation des figures 4a à 5b. La variante de la figure 9 diffère de ces modes de réalisation essentiellement en ce que l'évidement 121 se présente sous la forme d'une entaille ou encoche et non pas d'un orifice. L'encoche est formée sur un côté de l'élément 116 et définit un crochet de réception et de retenue d'une extrémité d'une tige de suspente.

## Revendications

1. Vis béton (110) pour la suspension d'une ossature pour faux plafond, cette vis béton ayant une forme générale allongée le long d'un axe (A) et comportant un premier tronçon axial (112) à filetage externe qui est configuré pour être vissé directement dans un orifice formé dans un plafond en béton, et un deuxième tronçon axial (114) d'entraînement de la vis qui est configuré pour être mis en prise avec un outil afin de mettre en rotation et de visser la vis dans l'orifice, ce deuxième tronçon comportant un filetage externe configuré pour recevoir par vissage un élément (116) de couplage à une tige filetée (120) de suspension de l'ossature, ladite vis (110) comprenant un évidement (121) transversal qui est configuré pour recevoir une extrémité d'une suspente (122) de suspension de l'ossature, ladite vis béton (110) étant **caractérisée en ce que** ledit évidement (121) traverse ledit filetage externe, ledit évidement (121) étant formé dans ledit deuxième tronçon

2. Vis béton (110) selon la revendication 1, dans laquelle elle comprend un unique évidement (121).

3. Vis béton (110) selon l'une des revendications 1 à 2, dans laquelle l'évidement se présente sous la forme d'une ouverture ou d'une entaille transversale.

4. Vis béton (110) selon l'une des revendications 1 à 3, dans laquelle les premier et deuxième tronçons sont formés d'une seule et même pièce.

5. Vis béton (110) selon l'une des revendications 1 à 4, dans laquelle le deuxième tronçon a en section axiale un bord périphérique externe hexagonal.

6. Vis béton (110) selon l'une des revendications 1 à 5, dans laquelle le deuxième tronçon comprend un orifice taraudé configuré pour recevoir la tige filetée.

7. Vis béton (110) selon l'une des revendications 1 à 6, comportant en outre un élément de couplage, lequel a en section axiale un bord périphérique externe hexagonal et un orifice central taraudé configuré d'une part pour être vissé sur le filetage externe du deuxième tronçon, et d'autre part pour recevoir la tige filetée.

8. Vis béton (110) selon l'une des revendications 1 à 7, dans laquelle ledit évidement (121) a un diamètre supérieur ou égale à 5mm et de préférence supérieur ou égale à 6mm.

9. Kit de suspension d'une ossature pour faux plafond, comportant au moins une vis béton (110) selon l'une des revendications précédentes, avec au moins une suspente (122) et/ou au moins une tige filetée (120).

10. Procédé d'installation d'une ossature pour faux plafond au moyen de vis béton (110) selon l'une des revendications 1 à 8, comprenant les étapes de :
- vissage de ces vis directement dans des orifices formés dans des plafonds en béton,
- engagement des extrémités de suspentes (122) dans les évidements de certaines de ces vis, et
- vissage de tiges filetées (120) dans des orifices taraudés des autres vis ou dans des orifices taraudés d'éléments de couplage (116) rapportés sur ces autres vis.

## Patentansprüche

1. Betonschraube (110) zum Aufhängen eines Zwischendeckengitters, wobei die Betonschraube eine im Allgemeinen längliche Form entlang einer Achse (A) hat und einen ersten axialen Abschnitt (112) mit einem Außengewinde, das so konfiguriert ist, dass es direkt in ein Loch geschraubt wird, das in einer Betondecke gebildet ist, und einen zweiten axialen Abschnitt (114) zum Treiben der Schraube aufweist, der so konfiguriert ist, dass er mit einem Werkzeug im Eingriff ist, um die Schraube zu drehen und in das Loch einzuschrauben, wobei dieser zweite Abschnitt ein Außengewinde aufweist, das so konfiguriert ist, dass es ein Element (116) durch Schrauben mit einer Gewindestange (120) koppelt, um das Gitter aufzuhängen, wobei die Schraube (110) eine Querausnehmung (121) aufweist, die so konfiguriert ist, dass sie ein Ende eines Aufhängeelements (122) zum Aufhängen des Gitters aufnimmt, wobei die Betonschraube (110) **dadurch gekennzeichnet ist, dass** die Ausnehmung (121) durch das Außengewinde verläuft, wobei die Ausnehmung (121) in dem zweiten Abschnitt ausgebildet ist.

2. Betonschraube (110) nach Anspruch 1, wobei sie eine einzige Ausnehmung (121) aufweist.

3. Betonschraube (110) nach einem der Ansprüche 1 bis 2, wobei die Ausnehmung die Form einer Queröffnung oder Querkerbe hat.

4. Betonschraube (110) nach einem der Ansprüche 1 bis 3, wobei der erste und der zweite Abschnitt aus ein und demselben Stück hergestellt sind.

5. Betonschraube (110) nach einem der Ansprüche 1 bis 4, wobei der zweite Abschnitt in seinem axialen Abschnitt eine sechseckige äußere Umfangskante aufweist.

6. Betonschraube (110) nach einem der Ansprüche 1 bis 5, wobei der zweite Abschnitt ein Gewindeloch aufweist, das zur Aufnahme der Gewindestange konfiguriert ist.

7. Betonschraube (110) nach einem der Ansprüche 1 bis 6, die ferner ein Kopplungselement, das
eine sechseckige äußere Umfangskante in seinem axialen Abschnitt aufweist, und
eine zentrale Gewindebohrung aufweist, die einerseits auf das Außengewinde des zweiten Abschnitts aufzuschrauben ist und andererseits die Gewindestange aufnimmt.

8. Betonschraube (110) nach einem der Ansprüche 1 bis 7, wobei die Ausnehmung (121) einen Durchmesser größer gleich 5 mm und vorzugsweise größer gleich 6 mm aufweist.

9. Bausatz zum Aufhängen eines Zwischendeckengitters, der zumindest eine Betonschraube (110) nach einem der vorhergehenden Ansprüche mit zumindest einem Aufhängeelement (122) und/oder zumindest einer Gewindestange (120) aufweist.

10. Verfahren zum Installieren eines Zwischendeckengitters unter Verwendung von Betonschrauben (110) nach einem der Ansprüche 1 bis 8, das die folgenden Schritte aufweist:
- Einschrauben dieser Schrauben direkt in Bohrungen in Betondecken,
- Eingreifen der Enden des Aufhängeelements (122) in die Ausnehmungen einiger dieser Schrauben, und
- Einschrauben von Gewindestangen (120) in Gewindebohrungen in den anderen Schrauben oder in Gewindebohrungen in an diesen anderen Schrauben befestigten Kupplungselementen (116).

## Claims

1. A concrete screw (110) for hanging a false ceiling frame, said concrete screw having a generally elongated shape along an axis (A) and comprising a first axial section (112) with an outer thread that is configured to be screwed directly into a hole made in a concrete ceiling, and a second axial section (114) for driving the screw that is configured to be engaged with a tool so as to rotate the screw and screw it into the hole, this second section comprising an outer thread configured to receive, by screwing, an element (116) for coupling to a threaded rod (120) for hanging the frame, said screw (110) comprising a transverse recess (121) that is configured to receive one end of a hanger (122) for hanging the frame, said concrete screw (110) being **characterized in that** said recess (121) runs through said outer thread, said recess (121) being made in said second section.

2. The concrete screw (110) according to claim 1, in which it comprises a single recess (121).

3. The concrete screw (110) according to any of claims 1 to 2, in which the recess is in the form of a transverse opening or notch.

4. The concrete screw (110) according to any of claims 1 to 3, in which the first and second sections are made from one and the same piece.

5. The concrete screw (110) according to any of claims 1 to 4, in which the second section has a hexagonal outer peripheral edge in its axial section.

6. The concrete screw (110) according to any of claims 1 to 5, in which the second section comprises a tapped hole configured to receive the threaded rod.

7. The concrete screw (110) according to any of claims 1 to 6, further comprising a coupling element, which
has a hexagonal outer peripheral edge in its axial section and
a tapped central hole configured, on the one hand, to be screwed onto the outer thread of the second section, and on the other hand to receive the threaded rod.

8. The concrete screw (110) according to any of claims 1 to 7, in which said recess (121) has a diameter greater than or equal to 5 mm and preferably greater than or equal to 6 mm.

9. A kit for hanging a false ceiling frame, comprising at least one concrete screw (110) according to any of the preceding claims, with at least one hanger (122) and/or at least one threaded rod (120).

10. A method for installing a false ceiling frame using concrete screws (110) according to any of claims 1 to 8, comprising the following steps:
- screwing these screws directly into holes made in concrete ceilings,
- engaging the ends of the hangers (122) in the recesses of some of these screws, and
- screwing threaded rods (120) into tapped holes in the other screws or into tapped holes in coupling elements (116) attached to these other screws.
